# EUROPEAN PATENT APPLICATION

(11) **EP 2 546 055 A1**
(43) Date of publication of application: **16.01.2013**
(21) Application number: 11753174.9
(22) Date of filing: 21.02.2011
(51) Int. Cl.: B32B 15/08, C09J 5/00, G01K 7/00

(54) **ELECTRONIC PART, METHOD OF MANUFACTURE FOR ELECTRONIC PART AND DIGITAL THERMOMETER**

(30) Priority: 10.03.2010 JP 2010053455
(71) Applicant: Omron Corporation, Kyoto-shi, Kyoto 600-8530 (JP)
(72) Inventor: MASUTANI, Naoki, Kyoto-shi, Kyoto 600-8530 (JP); NAKAJIMA, Seiji, Kyoto-shi, Kyoto 600-8530 (JP); FUKUHARA, Tomohiro, Kyoto-shi, Kyoto 600-8530 (JP); SUMIYA, Akio, Kyoto-shi, Kyoto 600-8530 (JP); NISHIKAWA, Kazuyoshi, Kyoto-shi, Kyoto 600-8530 (JP)
(74) Representative: Wilhelms · Kilian & Partner Patentanwälte
(86) International application number: PCT/JP2011/053743
(87) International publication number: WO 2011/111512

(57) **Abstract**

The present invention provides (A) an electronic part including a metal part combined with a non-metal part so as to cover the non-metal part, which electronic part can be assembled (i) with excellent workability, (ii) without requiring a high-temperature condition, and (iii) in a short period of time and (B) a method for manufacturing the electronic part. An electronic part (10) in accordance with the present invention includes (I) a non-metal part (11) and (II) a metal part (14) covering a covered region (11b) provided on a surface of the non-metal part (11). The covered region (11b) and the metal part (14) are combined together via an adhesive layer (12) provided by curing an ultraviolet anaerobic curing adhesive containing a photopolymerization initiator and organic peroxide.

## Description

### Technical Field

The present invention relates to an electronic part, a method for manufacturing an electronic part, and a digital thermometer. Specifically, the present invention relates to (i) an electronic part made up of a metal part and a non-metal part, which are connected to each other, (ii) a method for manufacturing the electronic part, and (iii) a digital thermometer including the electronic part.

### Background Art

In recent years, as electrical equipment and electronic devices have become more and more advanced, the structures of electronic parts intended for use in such equipment and devices have become sophisticated as well. Accordingly, there has been an increasing amount of demands for a high-level technology for assembling such electronic parts.

Examples of conventional methods for assembling an electronic part include (i) mechanical methods in which screws or the like are used to tightly combine different parts together and (ii) methods for combining different parts together with an adhesive or the like. While the use of screws makes it easy to combine different parts together, a combining part in this method is prone to let water in. Therefore, the use of screws for combining different parts together is impractical for manufacturing electronic parts which must be water proof (such as digital thermometers).

Examples of the adhesive encompass a variety of adhesives such as ultraviolet curing adhesives, thermosetting adhesives, room-temperature moisture curing adhesives, and anaerobic curing adhesives (see Patent Literatures 1 through 6).

### Citation List

### Patent Literatures

Patent Literature 1
   Japanese Patent Application Publication, Tokukai, No. 2006-98180 A (Publication Date: April 13, 2006)
Patent Literature 2
   Japanese Patent Application Publication, Tokukaihei, No. 3-118432 A (Publication date: May 21, 1991)
Patent Literature 3
   Japanese Examined Patent Application Publication, Tokukosho, No. 60-23794 A (Publication Date: June 10, 1985)
Patent Literature 4
   Japanese Examined Patent Application Publication, Tokukosho, No. 58-018960 A (Publication Date: April 15, 1983)
Patent Literature 5
   Japanese Patent Application Publication, Tokukai, No. 2007-26476 A (Publication Date: February 1, 2007)
Patent Literature 6
   Japanese Patent Application Publication, Tokukaihei, No. 6-225495 A (Publication Date: August 12, 1994)

### Summary of Invention

### Technical Problem

However, with regard to an electronic part in which a metal part is combined with a non-metal part so as to cover the non-metal part, there has been no technology for assembling such an electronic part (i) with excellent workability, (ii) without requiring a high-temperature condition, and (iii) in a short period of time. Thus, it is impossible to properly manufacture an electronic part such as a digital thermometer that is to be manufactured through the steps of (a) forming a hollow by combining a stainless cap (metal part) with a resin main body (non-metal part) and (b) placing, in the hollow, a mechanical part such as a sensor.

This means that, with an ultraviolet curing adhesive, it is difficult to combine a metal part and a non-metal part together in a case where the metal part is combined with the non-metal part so as to cover the non-metal part.

A thermosetting adhesive such as one disclosed in Patent Literature 1 requires a high-temperature condition for curing the adhesive, and there is therefore a possibility that a non-metal part receives some damage.

A room-temperature moisture curing adhesive becomes cured merely by being left exposed to air for a short period of time. Thus, this type of adhesive has an extremely limited working life, and is therefore not quite workable.

With a method (such as one disclosed in Patent Literature 2) in which a hollow inside a stainless cap is filled with a room-temperature curing adhesive, it takes a significant amount of time to cure the adhesive.

Patent Literatures 3 through 6 each disclose a technique in which an adhesive having both an ultraviolet curing characteristic and an anaerobic curing characteristic is used to combine different metal parts together. However, an anaerobic curing adhesive is unfortunately known for not producing a curing reaction while being in contact with non-metal parts.

The present invention has been made in view of the problems, and its primary object is to provide: (A) an electronic part which (i) includes a metal part combined with a non-metal part so as to cover the non-metal part and (ii) can be assembled (a) with excellent workability, (b) without requiring a high-temperature condition, and (c) in a short period of time and (B) a method for manufacturing the electronic part.

### Solution to Problem

In order to attain the object, an electronic part in accordance with the present invention includes: a non-metal part; and a metal part covering a covered region provided on a surface of the non-metal part, the covered region and the metal part being combined together via an adhesive layer provided by curing an ultraviolet anaerobic curing adhesive containing a photopolymerization initiator and organic peroxide.

According to the configuration, non-metal part and the metal part are combined together by use of an ultraviolet anaerobic curing adhesive. A gap between the metal part and the non-metal part is irradiated with ultraviolet light so that radicals are generated. First, the radicals cure a part of the adhesive, which part is in the vicinity of an entrance from which the ultraviolet light enters the gap. Then, chain polymerization as a polymerization reaction of the radicals cures a part of the adhesive, which part is not directly irradiated with the ultraviolet light (part which is in contact with the non-metal part). Meanwhile, a chemical reaction of a metal surface of the metal part and the organic peroxide contained in the adhesive is accelerated by, as a trigger, radicals generated in the vicinity of the entrance. Then, radicals, which are generated by the chemical reaction of the metal surface and the organic peroxide, cure a part of the adhesive, which part is in contact with the metal part. This makes it possible to combine the non-metal part and the metal part together (i) without requiring a high-temperature condition and (ii) in a short period of time. Additionally, an ultraviolet anaerobic curing adhesive is quite workable because of its long working life (described later).

With the configuration, it is thus possible to provide an electronic part which (i) is quite workable, (ii) does not require a high-temperature condition, and (iii) can be assembled in a short period of time.

A method in accordance with the present invention for manufacturing an electronic part is a method for manufacturing an electronic part, said electronic part, including: a non-metal part; and a metal part covering a covered region provided on a surface of the non-metal part, said method, including the steps of: (i) forming, between the covered region and the metal part, an adhesive layer by use of an ultraviolet anaerobic curing adhesive containing a photopolymerization initiator and organic peroxide; and (ii) irradiating, with ultraviolet light, a gap between the non-metal part and the metal part.

According to the configuration, the non-metal part and the metal part are combined together by use of an ultraviolet anaerobic curing adhesive. A part of the adhesive, which part is in contact with the metal part, is cured with the use of radicals generated by a chemical reaction of the organic peroxide and the metal part. Meanwhile, a part of the adhesive, which part is in contact with the non-metal part, is cured, in a chain reaction, by radicals generated by the ultraviolet light entering through the gap between the metal part and the non-metal part. This makes it possible to combine the non-metal part and the metal part together (i) without requiring a high-temperature condition and (ii) in a short period of time. Additionally, an ultraviolet anaerobic curing adhesive is quite workable because of its long working life (described later).

With the configuration, an electronic part can be thus manufactured (i) with excellent workability, (ii) without requiring a high-temperature condition, and (iii) in a short period of time.

### Advantageous Effects of Invention

With the present invention, it is possible to provide (A) an electronic part in which (i) a metal part is combined with a non-metal part so as to cover the non-metal part and (ii) the combining (assembling) can be carried out (a) with excellent workability, (b) without requiring a high-temperature condition, and (c) in a short period of time and (B) a method for manufacturing the electronic part.

Additional objects, features, and strengths of the present invention will be made clear by the description below. Furthermore, the advantages of the present invention will be evident from the following explanation with reference to the drawings.

### Brief Description of Drawings

Fig. 1

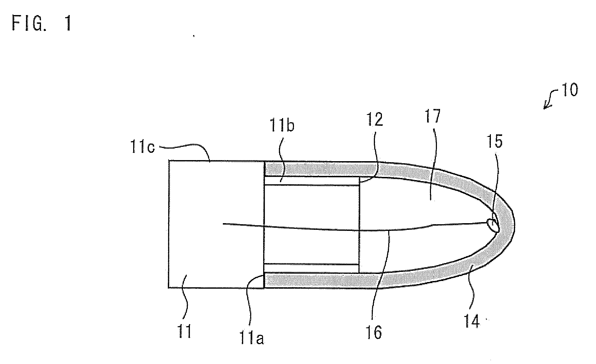

   Fig. 1 is a view schematically illustrating a configuration of an electronic part in accordance with an embodiment of the present invention.
Fig. 2

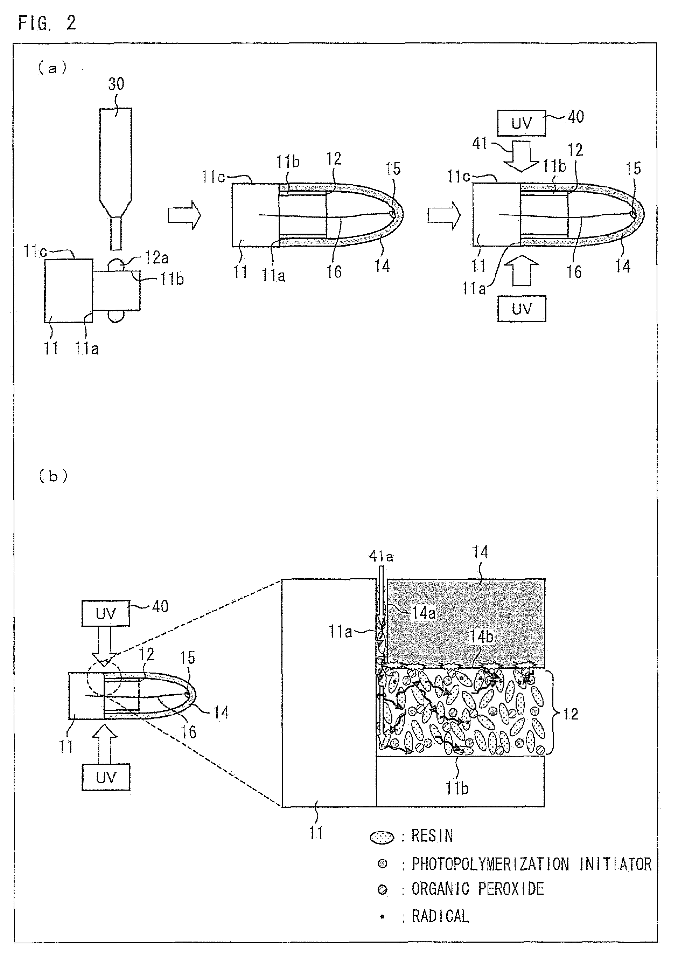

   Fig. 2 is a view illustrating a process of manufacturing the electronic part in accordance with the embodiment of the present invention.
Fig. 3

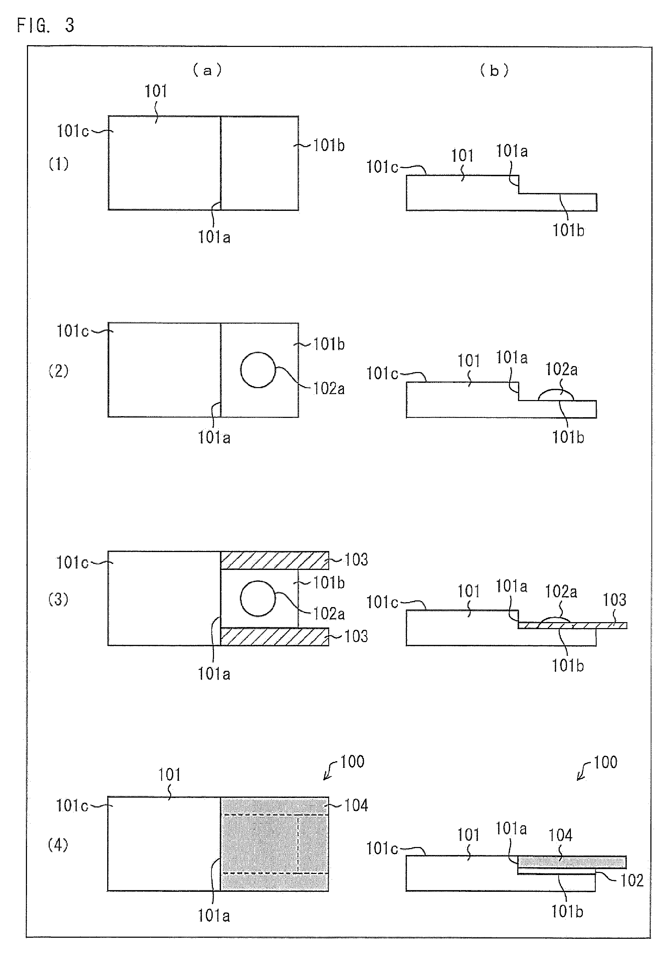

   Fig. 3 is a view illustrating a process of manufacturing an adhesion evaluation sample used for an adhesion evaluation.
Fig. 4

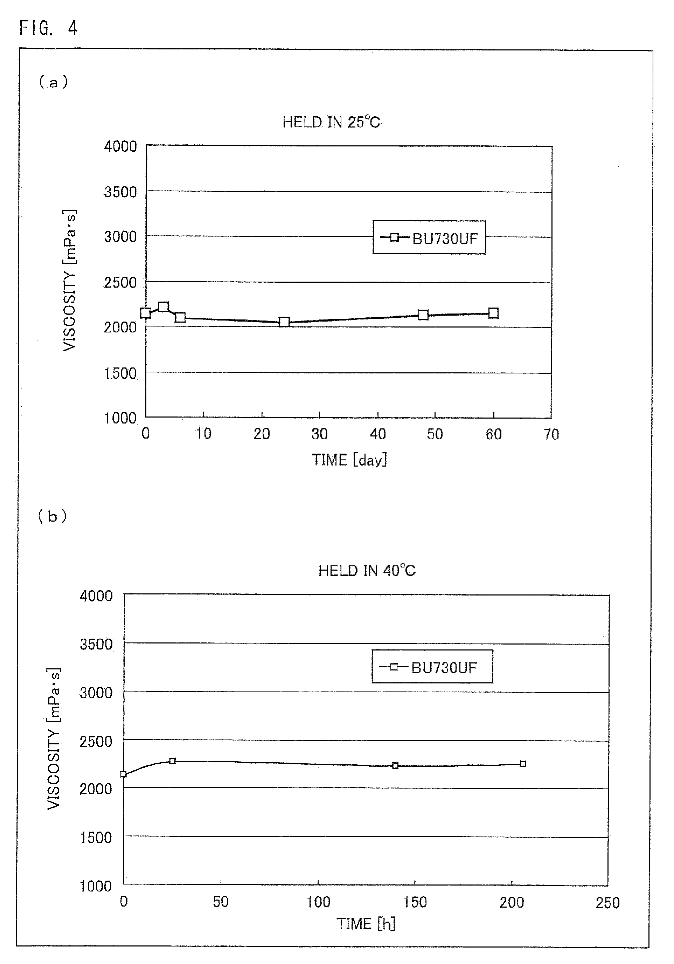

   Fig. 4 is a set of graphs each illustrating a working life of each adhesive used in the embodiment of the present invention.
Fig. 5

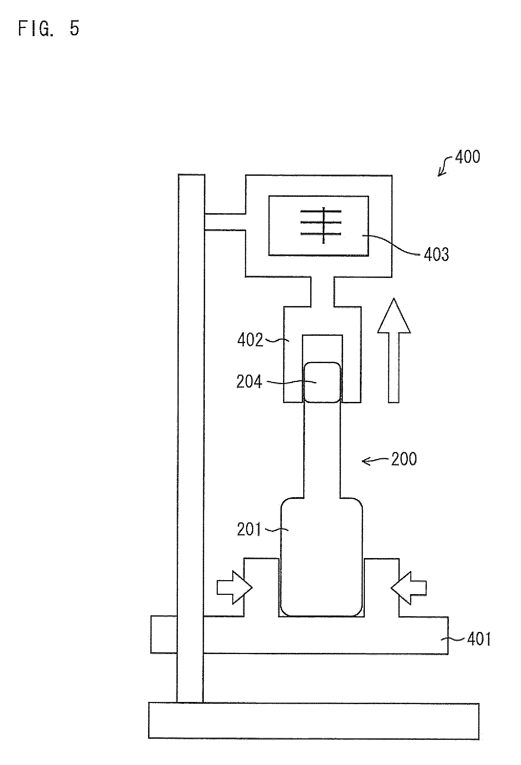

   Fig. 5 is a view illustrating the execution of an experiment in which a production model is used to evaluate the strength of each adhesive.
Fig. 6

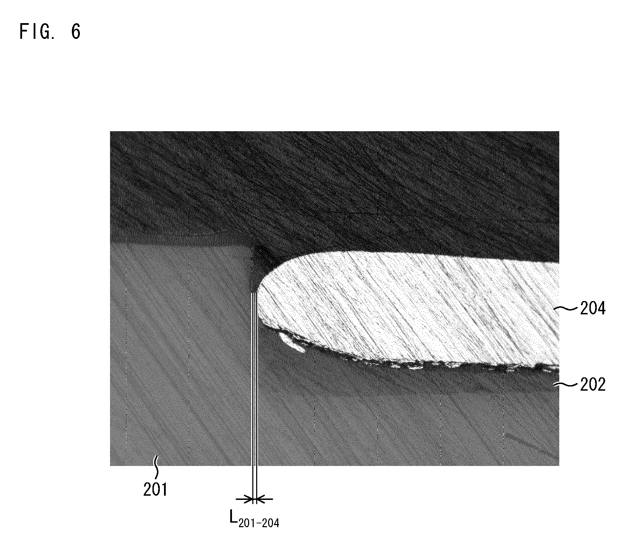

   Fig. 6 is an enlarged photograph of a combining part of a digital thermometer in accordance with the embodiment of the present invention.

### Description of Embodiments

The following description will discuss, with reference to the drawings, an embodiment of the present invention. Fig. 1 is a view schematically illustrating an electronic part 10 in accordance with the embodiment of the present invention.

As illustrated in Fig. 1, the electronic part 10 is made up of a non-metal part 11 and a metal part 14 covering part of the non-metal part 11. A step 11a is provided on a surface of the non-metal part 11, and the non-metal part 11 is divided into a lower region (covered region) 11b and an upper region (adjacent region) 11c. The lower region 11b and the metal part 14 are attached to each other via an adhesive layer 12. This, by design, causes (the upper region 11c of) the non-metal part 11 and the metal part 14 to share a continuous surface. Note that a cross section of a gap between the metal part 14 and the non-metal part 11 is in the shape of a letter L.

The adhesive layer 12 is produced by curing an ultraviolet anaerobic curing adhesive 12a containing a photopolymerization initiator and organic peroxide. Hereinafter, an "ultraviolet anaerobic curing adhesive" refers to an adhesive that is both ultraviolet curing and anaerobic curing. Anaerobic curing refers to curing of an object by having the object come into contact with a metal in an oxygen-free condition. The ultraviolet anaerobic curing adhesive 12a in accordance with the present embodiment contains a photopolymerization initiator. The photopolymerization initiator generates radicals upon reception of ultraviolet light, which radicals trigger an initiation of a polymerization reaction. This ultimately causes an adhesive to be cured. The ultraviolet anaerobic curing adhesive 12a also contains organic peroxide. The organic peroxide (metal catalyst) reacts with a metal (redox reaction), so that radicals are generated. The radicals trigger an initiation of a polymerization reaction. This ultimately causes an adhesive to be cured.

The electronic part 10 has a hollow 17 enclosed with the metal part 14 and the non-metal part 11. A sensor 15 for sensing a temperature is provided in the hollow 17, and a lead wire 16 for transmitting a signal is connected to the sensor 15. This allows the electronic part 10 to be suitably used as a component of, for example, a digital thermometer.

Fig. 2 is a view for describing a method for manufacturing the electronic part 10. The method for manufacturing the electronic part 10 includes the steps of (A) forming, between the lower region 11b and the metal part 14, an adhesive layer 12 made of the ultraviolet anaerobic curing adhesive 12a containing both a photopolymerization initiator and organic peroxide and (B) irradiating, with ultraviolet light, a gap between the non-metal part 11 and the metal part 14. Each of the steps (A) and (B) will be described below in detail.

### (Step (A))

In the step (A) (refer to the description in the preceding paragraph), the adhesive layer 12 made of the ultraviolet anaerobic curing adhesive 12a is formed between the metal part 14 and the non-metal part 11.

Examples of a method for forming the adhesive layer 12 encompass, but not limited to, a method in which the ultraviolet anaerobic curing adhesive 12a is easily formed by (i) applying or spraying, by use of an adhesive-supplying means 30, the ultraviolet anaerobic curing adhesive 12a to or into the lower region 11b of the non-metal part 11, respectively (see the left column of (a) of Fig. 2) and then (ii) covering the ultraviolet anaerobic curing adhesive 12a with the metal part 14 (see the center column of (a) of Fig. 2).

### (Step (B))

In the step (B) (refer to the description described three paragraphs earlier) after forming the adhesive layer 12, the adhesive layer 12 is irradiated with ultraviolet light irradiating through a gap between the non-metal part 11 and the metal part 14. As illustrated in the right column of (a) of Fig. 2, for example, an ultraviolet irradiation apparatus 40 is used to emit ultraviolet light 41 through the gap between the step 11a of the non-metal part 11 and the metal part 14.

The following description will discuss, in detail with reference to (b) of Fig. 2, the mechanism of a curing reaction. (b) of Fig. 2 is a view illustrating the details of, in the step (B), a combining part where the non-metal part 11 and the metal part 14 are combined together. At the combining part, the adhesive layer 12 is formed between the lower region 11b of the non-metal part 11 and a bottom surface 14b of the metal part 14 (see (b) of Fig. 2).

When the ultraviolet irradiation apparatus 40 is used to emit the ultraviolet light 41 through the gap between the step 11a of the non-metal part 11 and an end surface 14a of the metal part 14, the ultraviolet light 41 thus emitted passes through a pathway indicated by an arrow 41a. This causes a part of the adhesive layer 12, which part is in the vicinity of the step 11a, to become cured. Then, a chain reaction of radicals generated by the irradiation of the ultraviolet light trigger curing of a part of the ultraviolet anaerobic curing adhesive 12a, which part is in the vicinity of the lower region 11b.

In addition, at the bottom surface 14b of the metal part 14, radicals are generated by a redox reaction in which the organic peroxide in the adhesive reacts with the metal surface. This causes a part of the ultraviolet anaerobic curing adhesive 12a, which part is in the vicinity of the bottom surface 14b, to be cured. Then, a chain reaction of radicals generated in the vicinity of the metal surface trigger the curing of the ultraviolet anaerobic curing adhesive 12a toward the part in the vicinity of the lower region 11b from the bottom surface 14b.

With such a mechanism of the curing reaction, it is possible to cure on a non-metal-part-11 side of and on a metal-part-14 side of the ultraviolet anaerobic curing adhesive 12a. Note that, in contrast to the conventional technologies, the method in accordance with the present embodiment makes it possible to put the embodiment into practice (i) with excellent workability, (ii) without requiring a high-temperature condition, and (iii) in a short period of time (see Examples described later). In other words, in contrast to electronic parts of the conventional technologies, it is possible, with the electronic part in accordance with the present embodiment, to combine the non-metal part 11 and the metal part 14 together (i) with excellent workability, (ii) without requiring a high-temperature condition, and (iii) in a short period of time.

Since the electronic part 10 can be thus assembled in a short period of time, it is possible to expect an improvement in productivity, a reduction in the inventory in a production line, and a simplification of inventory management. Furthermore, since high-temperature heating is not required, it is possible to combine parts together without causing damage to them. This allows a non-metal part to be made of a wide selection of materials.

### (Metal Part)

Examples of the material for the metal part 14 encompass various materials such as Fe, A1, Cu, Ag, Au, and alloys of such. Especially, Fe, Cu, or an alloy containing at least one of Fe and Cu (e.g. stainless, brass), is preferred because of its fast-curing characteristic and excellent heat conductivity (see Examples described later).

### (Non-Metal Part)

In the present specification, a "non-metal" material refers to any material except for metal, which material has no metallic property. Since the electronic part in accordance with the present embodiment does not require a high-temperature condition in which the metal part 14 and the non-metal part 11 are combined together, a wide range of materials can be used as a material for the non-metal part 11. Examples of the material encompass, but not limited to, at least one material selected from the group consisting of resin, ceramic, glass, and rubber. Examples of the resin encompass PE (polyethylene), PP (polypropylene), PI (polyimide), ABS (acrylonitrile-butadiene-styrene copolymer), PEEK (polyether ether ketone), and LCP (liquid-crystal polymer). Examples of the ceramic encompass Al₂O₃ and SiC.

### (Ultraviolet Anaerobic Curing Adhesive)

The ultraviolet anaerobic curing adhesive 12a is not limited to a specific one, provided that an adhesive is ultraviolet curing and anaerobic curing. Such an adhesive preferably contains a photopolymerization initiator, organic peroxide, and resin.

Examples of the resin having a curing reactivity encompass an acrylic resin and an epoxy resin. In a case where an acrylic resin or an epoxy resin is used as an ultraviolet curing adhesive, the acrylic resin is to be polymerized with radicals, and the epoxy resin is to be polymerized with cations (or anions). In the present invention, an acrylic resin is preferable from the perspective that radicals, which are generated by irradiation of ultraviolet light or by reactions at a metal surface, are used for a curing reaction of a resin. Examples of the acrylic resin encompass, but not limited to, general acrylate and methacrylate.

A photopolymerization initiator refers to a substance that generates radicals while being irradiated with ultraviolet light. Examples of the substance encompass, but not limited to: 2-hydroxy-2-methyl-1-phenyl-propan-1-one; 1-hydroxycyclohexyl-phenyl-ketone; 2-benzyl-2-dimethylamino-1-(4-morpholinophenyl)-butanone-1; 2,2-dimethoxy-1,2-diphenylethan-1-one; bis (2,4,6-trimethylbenzoyl)-phenylphosphine oxide; 2-methyl-1 [4-(methylthio) phenyl]-2-morpholinopropan-1-one; 1-[4-(2-hydroxyethoxy)-pheny)-2-hydroxy-2-methyl-1-propan-1-one; 2,4,6-trimethylbenzoyldiphenylphosphine=oxide. It is preferable to use a photopolymerization initiator that has an optimum absorption wavelength with respect to a wavelength of light emitted from a light source to be used for ultraviolet light irradiation.

Examples of the organic peroxide encompass, but not limited to, hydroperoxide, ketone peroxide, dialkyl peroxide, peroxyester, and diacyl peroxide, all of which have high redox reactivity with metal. Specifically, the examples encompass, but not limited to (i) a hydroperoxide such as: cumene hydroperoxide; t-butyl hydroperoxide; p-menthane hydroperoxide; diisopropylbenzene hydroperoxide; 1,1,3,3-tetramethylbutyl hydroperoxide, (ii) a ketone peroxide such as: methyl ethyl ketone peroxide; cyclohexanone peroxide; acetylacetone peroxide, (iii) a dialkyl peroxide such as dicumyl peroxide; di-t-butyl peroxide; di-t-hexyl peroxide; t-butyl cumyl peroxide, (iv) a peroxyester such as t-butyl peroxypivalate; t-hexyl peroxypivalate, and (v) a diacyl peroxide such as diisobutyryl peroxide and dilauroyl peroxide. Examples

### [1. Preparation of Adhesion Evaluation Sample and Evaluation of Adhesion]

### (Preparation of Adhesion Evaluation Sample)

The following description will discuss, with reference to Fig. 3, a preparation of an adhesion evaluation sample 100 that was used in Examples and in Comparative Examples.

Fig. 3 is a view illustrating each of the steps (1) through (4) in the preparation of the adhesion evaluation sample 100. In Fig. 3, (i) column (a) shows top views each obtained when viewing, from above, the adhesion evaluation sample 100 in the process of being prepared and (ii) column (b) shows side views each obtained when viewing, from the side, the adhesion evaluation sample 100. In addition, Tables 1 and 2 show the respective conditions in each of which the adhesion evaluation sample 100 was prepared.

As illustrated in line (1) of Fig. 3, a top surface of a non-metal part 101 used to prepare the adhesion evaluation sample 100 is divided, by a step 101a provided in the vicinity of a center of the top surface, into a lower region (covered region) 101 b and an upper region (adjacent region) 101 c.

As a material for the non-metal part 101, (i) an ABS (acrylonitrile-butadiene-styrene copolymer) was used in Examples 1 through 4, 8 through 15, and Comparative Examples 1 through 6, (ii) a PEEK (polyether ether ketone) was used in Example 5, (iii) an LCP (liquid-crystal polymer) was used in Example 6, and (iv) a PI (polyimide) was used in Example 7.

Subsequently, a proper amount of an adhesive 102 was dropped to the lower region 101 b of the non-metal part 101 (see line (2) of Fig. 3).

As the adhesive 102, (i) an ultraviolet anaerobic curing adhesive, BU730UF (trade name: ARONIX (registered trademark) manufactured by TOAGOSEI Co., Ltd.), was used in Examples 1 through 12, 14, and 15, (ii) an ultraviolet anaerobic curing adhesive, BU810 (manufactured by TOAGOSEI Co., Ltd.), was used in Example 13, (iii) a thermosetting epoxy adhesive was used in Comparative Example 1, (iv) a moisture curing acrylate adhesive was used in Comparative Example 2, (v) a room-temperature curing silicone adhesive was used in Comparative Example 3, and (vi) an ultraviolet curing adhesive, UVX-5457 (manufactured by TOAGOSEI Co., Ltd.), was used in Comparative Examples 4 through 6.

Next, as illustrated in line (3) of Fig. 3, two thickness gauges 103 were provided on the lower region 101b between which the adhesive 102 is sandwiched. The thickness gauges 103 were spacer members for providing the adhesive 102 in a desired thickness. Thus, pieces of metal (made of SUS), each having a thickness identical with the desired thickness, were used as the thickness gauges 103. Specific thicknesses of the thickness gauges 103 were configured to be (i) 100 µm in Examples 1, 5 through 14, and Comparative Examples 1 through 3, (ii) 50 µm in Example 2, (iii) 200 µm in Example 3, (iv) 400 µm in Example 4, (v) 1,000 µm in Example 15, (vi) 10 µm in Comparative Example 4, (vii) 20 µm in Comparative Example 5, and (viii) 30 µm in Comparative Example 6.

Subsequently, as illustrated in the line (4) of Fig. 3, a metal part 104 was laid on the lower region 101b so that each of the thickness gauges 103 is sandwiched between the metal part 104 and the lower region 101b. This caused a layer of an adhesive layer 102 to be formed. Then, the adhesive 102 was cured in a predetermined condition. In Examples 1 through 15, the adhesive 102 was cured through being irradiated with ultraviolet light (UV), and then being left, for a predetermined amount of time, in a thermostatic chamber in which the temperature was held at 60 °C. The predetermined amount of time (curing time) was set to (i) 10 minutes in Examples 1 through 3, 5 through 8, 10, and 13, (ii) 1 hour in Example 4, (iii) 30 minutes in Examples 9, 11, and 12, (iv) 5 minutes in Example 14, and (v) an extended period of time in Example 15. In Comparative Examples 1 through 3, the adhesive 102 was cured through being left, for a predetermined amount of time, in a thermostatic chamber in which respective predetermined temperatures were kept. In Comparative Examples 1 through 3, the adhesive 102 was left in a temperature of 100 °C for 2 hours, in a room temperature for several minutes, and in a room temperature for 24 hours, respectively. Furthermore, in Comparative Examples 4 through 6, the adhesive 102 was cured through being irradiated with ultraviolet light (UV). Note that the irradiation of the ultraviolet light in each Example and Comparative Example was carried out, by use of an ultraviolet irradiation apparatus (manufactured by TAKEDEN Corporation), at an output of 600 mW/cm² for 2 seconds (equivalent to an ultraviolet light irradiation amount of 1200 mJ/cm²).

After completing the curing of the adhesive 102, the thickness gauges 103 were removed. As illustrated in the line (4) of Fig. 3, the adhesion evaluation sample 100, in which the metal part 104 and the non-metal part 101 were combined together via the cured adhesive 102, was thus prepared.

### (Evaluation of Adhesion)

Subsequently, the adhesion of each adhesion evaluation sample thus prepared was evaluated. The evaluation was made by judging whether or not each adhesive 102 was cured.

Specifically, whether each adhesive 102 was cured was judged by (i) removing, from the non-metal part 101, the metal part 104 of the adhesion evaluation sample 100 thus prepared and then (ii) feeling, with a finger, an adhesive remaining on either the metal part 104 or the non-metal part 101. In so doing, the curing of the adhesive 102 was determined as (a) "NO" in cases where uncured adhesives adhered to the finger or were still tacky and (b) "YES" in cases where cured adhesives were no longer tacky.

### (Evaluation of Working life (Pot Life) of Adhesive)

A "working life" (also called a "pot life") of an adhesive refers to a period of time between the application of the adhesive and the initiation of an increase in the viscosity of the adhesive in a fixed condition (generally at a temperature of 25 °C (room temperature)). A "working life" serves as an indication pointer of an object's workability.

The working life of the ultraviolet anaerobic curing adhesives, BU730UF, was measured under both conditions, one in which the temperature was held at 25 °C and the other in which the temperature was held at 40 °C. Fig. 4 illustrates the results.
(a) of Fig. 4 illustrates how a viscosity of the ultraviolet anaerobic curing adhesive, BU730UF, changes over time at a temperature of 25 °C. In this case, a noticeable increase in the viscosity was not observed for at least two (2) months. This made it clear that the working life of the adhesive at a temperature of 25 °C is at least two (2) months. On the other hand, (b) of Fig. 4 illustrates how a viscosity of the ultraviolet anaerobic curing adhesive, BU730UF, changes over time at a temperature of 40 °C. As shown in (b) of Fig. 4, a noticeable increase in the viscosity was not observed for at least 200 hours. This indicates that the working life of the adhesive at a temperature of 40 °C is at least 200 hours. Each working life of the other adhesives used in Examples and Comparative Examples was likewise measured.

### (Evaluation of Adhesion Strength on Production Model)

A production model 200 of a digital thermometer was prepared with the use of an adhesive (ultraviolet anaerobic curing adhesive, BU730UF (trade name: ARONIX (registered trademark) manufactured by TOAGOSEI Co., Ltd.) identical to the one used in Example 1. The adhesive was applied to a tip of a resin main body (non-metal part) 201, and a stainless cap (metal part) 204 was then fitted in the tip. The length, at a combining surface, between the resin main body 201 and the stainless cap 204 was set to 250 µm. Subsequently, an ultraviolet irradiation apparatus was used to irradiate the production model 200 with ultraviolet light at an output of 600 mW/cm² for 2 seconds (equivalent to an ultraviolet light irradiation amount of 1200 mJ/cm²). The production model 200 was then left, for 10 minutes, in a thermostatic chamber in which the temperature was held at 60 °C.

Then, the adhesion strength of the production model 200 thus prepared was measured. Fig. 5 illustrates how the adhesion strength of the production model 200 was measured. An adhesion strength measuring device 400 includes (i) a fixing section 401 for fixing the resin main body 201 of the production model 200 and (ii) a fixing section 402 for fixing the stainless cap 204 of the production model 200. A load generating section 403 was then used to apply load in such a direction that separates the fixing section 401 from the fixing section 402. The result (a) showed that an adhesive layer provided between the resin main body 201 and the stainless cap 204 was completely cured and therefore (b) demonstrated that the adhesive had adhesion strength of not less than 100 N.

The adhesion strength of the production model 200 was likewise measured and evaluated under each of the conditions of Examples 2 through 15 and Comparative Examples 1 through 6.

The results are shown in Tables 1 and 2 below. In the "Cured (Adhering)" row, "YES" and "NO" are shown as "o" and "x" respectively. In the "Curing Condition", "Curing Time", and "Working Life" rows, "o", "Δ", or "×" was added to indicate that the data of the respective sections was favorable, acceptable, or unfavorable, respectively. In the "Adhesion Strength" row, "x", "Δ", or "o" was put down to indicate that the adhesion strength was (i) less than 20 N, (ii) in the range of 20 N to 80 N, or (iii) more than 80 N, respectively.

**Table 1**

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Metal Part | SUS | SUS | SUS | SUS | SUS | SUS | SUS | Fe | Al | Cu | Ag |
| Non-Metal Part | ABS | ABS | ABS | ABS | PEEK | LCP | PI | ABS | ABS | ABS | ABS |
| Adhesive | BU730UF UV Anaerobic | BU730UF UV Anaerobic | BU730UF UV Anaerobic | BU730UF UV Anaerobic | BU730UF UV Anaerobic | BU730UF UV Anaerobic | BU730UF UV Anaerobic | BU730UF UV Anaerobic | BU730UF UV Anaerobic | BU730UF UV Anaerobic | BU730UF UV Anaerobic |
| A. T. | 100 *µ*m | 50 *µ*m | 200 *µ*m | 400 *µ*m | 100 *µm* | 100 *µ*m | 100 *µ*m | 100 *µ*m | 100 *µ*m | 100 *µ*m | 100 *µ*m |
| Curing Condition | UV, 60°C | V, 60 °C | UV, 6 0°C | UV, 60°C | UV, 60°C | UV, 60°C. | UV, 6 0°C | UV, 60°C | UV, 60°C. | UV, 60 °C | UV, 60°C |
| | ○ | ○ | ○ | ○ | ○ | ○ | ○ | ○ | ○ | ○ | ○ |
| Curing Time | 10 Min. | 10 Min | 10 Min | 1 Hr. | 10 Min. | 10 Min. | 10 Min. | 10 Min | 30 Min. | 10 Min | 30 Min. |
| | ○ | ○ | ○ | Δ | ○ | ○ | ○ | ○ | Δ | ○ | Δ |
| Adhering | ○ | ○ | ○ | ○ | ○ | ○ | ○ | ○ | ○ | ○ | ○ |
| A S | ○ | ○ | ○ | ○ | ○ | ○ | ○ | ○ | ○ | ○ | ○ |
| Working Life | Several Mon. | Several Mon. | Several Mon. | Several Mon | Several Mon | Several Mon | Several Mon | Several Mon. | Several Mon. | Several Mon. | Several Mon. |
| | ○ | ○ | ○ | ○ | ○ | ○ | ○ | ○ | ○ | ○ | ○ |

| | | | | | | | | | | | |
|---|---|---|---|---|---|---|---|---|---|---|---|
| * List of Abbreviations and Explanations A. T. = Adhesive Thickness; A. S. = Adhesion Strength; Min. = Minutes; Hr. = hours; Mon. = months | | | | | | | | | | | |

**Table 2**

| | Example 12 | Example 13 | Example 14 | Example 15 | | C. E. 1 | C. E. 2 | C. E. 3 | C. E. 4 | C. E. 5 | C. E. 6 |
|---|---|---|---|---|---|---|---|---|---|---|---|
| Metal Part | Au | SUS | SUS | SUS | | SUS | SUS | SUS | SUS | SUS | SUS |
| n-Metal Part | ABS | ABS | ABS | ABS | | ABS | ABS | ABS | ABS | ABS | ABS |
| Adhesive | BU730UF UV Anaerobic | BU810 UV Anaerobic | BU730UF UV Anaerobic | BU730UF UV Anaerobic | | Thermosetting Epoxy | Moisture Curing Acrylate | R. T. Curing Silicon | UVX-5457 UV | UVX-5457 UV | UVX-6457 UV |
| A. T. | 100 *µ*m | 100 *µ*m | 100 *µ*m | 100 *µ*m | | 100 *µ*m | 100 *µ*m | 100 *µ*m | 10 *µ*m | 20 *µ*m | 30 *µ*m |
| Curing Condition | UV, 60°C | UV, 60°C | V, 60°C | UV, 60°C | | 100°C | R.T. | R. T. | UV | UV | UV |
| | | | | | | Δ | ○ | ○ | ○ | ○ | ○ |
| | | ○ | ○ | ○ | | | | | | | |
| Curing Time | 30 Min | 10 Min. | 5 Min. | - | | 2 Hr. | Several Min. | 24 Hr. | Several Sec. | Several Sec. | Several Sec. |
| | Δ | ○ | ○ | | | Δ | ○ | Δ | ○ | ○ | ○ |
| Adhering | ○ | ○ | × | × | | ○ | ○ | ○ | ○ | × | × |
| A. S. | ○ | ○ | Δ | × | | ○ | ○ | ○ | ○ | × | × |
| Working Life | Several Mon. | Several Mon. | Several Mon. | Several Mon. | | 5 Hr. | Several Mien. | 24 Hr. | Several Mon. | Several Mon. | Several Mon. |
| | ○ | ○ | ○ | ○ | | Δ | X | Δ | ○ | ○ | ○ |

| | | | | | | | | | | | |
|---|---|---|---|---|---|---|---|---|---|---|---|
| * List of Abbreviations and Explanations C. E. = Comparative Example; R. T. = Room Temperature; A. T. = Adhesive Thickness; A. S. = Adhesion Strength; Sec. = Seconds; Min. = Minutes; Hr. = hours; Mon. = months | | | | | | | | | | | |

As shown in each Example, the use of the ultraviolet anaerobic curing adhesive made it possible to combine the metal part and the non-metal part together (i) at relatively low temperature (e.g. 60 °C), (ii) in a short period of time (for example, 10 minutes), and (iii) with excellent workability (working life: several months). Additionally, as shown in Example 4, the metal part and the non-metal part were successfully combined together even in a case where the adhesive was thick (400 µm).

As shown in Comparative Example 1, on the other hand, a curing procedure was necessary at high temperature (100 °C) and for an extended period of time (2 hours) in a case where a thermosetting epoxy adhesive was used. On top of that, the working life of the thermosetting epoxy adhesive was relatively short (5 hours). This suggests that, in a case where a thermosetting epoxy adhesive is used, (i) parts involved need to be heat resistant, (ii) an assembling efficiency is substandard, and (iii) the workability of a device is unsatisfactory.

In a case where a moisture curing acrylate adhesive was used (see Comparative Example 2), the working life of the adhesive was extremely short (several minutes) despite the fact that a metal part and a non-metal part were combined together in a short period of time. This suggests unsatisfactory workability of a device in a case where a moisture curing acrylate adhesive is used. It was also problematic that ingredients of the adhesive caused a degradation of surfaces of a resin (ABS).

In a case where a room-temperature silicone adhesive was used (see Comparative Example 3), it required a significantly long time (24 hours) to cure the adhesive. This suggests a significantly substandard assembling efficiency in such a case.

In cases where (i) ultraviolet curing adhesives were used and (ii) the adhesives were thick (20 µm or more), the adhesion of the adhesives was insufficient (see Comparative Examples 4 through 6).

It was thus revealed that the present invention makes it possible to combine together a metal part and a non-metal part more suitably than the conventional technologies.

It was also revealed, by comparing the results of Example 1 and 14, that the use of the ultraviolet curing adhesive makes it possible to suitably cure, within 10 minutes, an adhesive having a thickness of 100 µm.

It was also revealed, by comparing the results of Examples 1 through 4 and Example 15, that the use of the ultraviolet curing adhesive makes it possible to cure an adhesive having a thickness of 400 µm.

It was also revealed, by comparing the results of Examples 1 and 5 through 7, that examples of a material for the non-metal parts to be combined encompass a variety of non-metal materials such as an ABS (acrylonitrile-butadiene-styrene copolymer), a PEEK (polyether ether ketone), an LCP (liquid-crystal polymer), and a PI (polyimide).

It was also revealed, by comparing the results of Examples 1 and 8 through 12, that examples of a material for the metal parts to be combined encompass a variety of metals such as SUS, Fe, A1, Cu, AG, and Au. Furthermore, it was revealed that a curing time is especially short in a case where a metal part is made of Fe or Cu.

### (Combining Part)

Fig. 6 is an enlarged photograph of a combining part at which the resin main body 201 and the stainless cap 204 are combined together in the production model 200. A gap L₂₀₁-₂₀₄, in a vertical direction of Fig. 6, between the resin main body 201 and the stainless cap 204 (precisely, between a step 201a of the resin main body 201 and an end surface 204a of the stainless cap 204) was in the range of 2 µm to 20 µm.

### (Additional Remarks)

It is preferable to arrange the electronic part in accordance with the present invention such that an adhesive layer has a thickness of more than 0 µm and not more than 400 µm.

The electronic part, in a case where its thickness falls in the range above, can be efficiently assembled.

The electronic part in accordance with the present invention (i) can be arranged such that a step is provided between a covered region and an adjacent region which is adjacent, on a surface of a non-metal part, to the covered region, the step being provided so that the adjacent region is elevated higher than the covered region and (ii) is preferably arranged such that the non-metal part and a metal part share a continuous surface.

According to the electronic part in accordance with the present invention, (i) a part of an adhesive, which part is on a metal-part side, is cured by an aerobic curing effect and (ii) a part of the adhesive, which part is on a non-metal-part side, is cured by an ultraviolet curing effect produced by reflection of ultraviolet light entering from a gap between the non-metal part and the metal part. Therefore, even in a case where such a step as one described above is provided on the surface of the non-metal part so that the gap between the non-metal part and the metal part has an L-shaped cross section, the non-metal part and the metal part can be successfully combined together. With the configuration, it is also possible to suitably provide an electronic part made up of a non-metal part and a metal part which share a continuous surface.

It is preferable to arrange the electronic part in accordance with the present invention such that the metal part is made of iron, copper, or an alloy containing at least one of iron and copper.

With the configuration, it is possible to cure an ultraviolet anaerobic curing adhesive in a short period of time. Therefore, the non-metal part and the metal part can be combined together in even a shorter period of time.

It is preferable to arrange the electronic part in accordance with the present invention such that the non-metal part is made of at least one material selected from a group consisting of resin, ceramic, glass, and rubber.

At least one material selected from a group consisting of resin, ceramic, glass, and rubber, can be suitably used as a material for the non-metal part of the electronic part in accordance with the present invention.

The electronic part in accordance with the present invention can further include: a sensor provided in a hollow enclosed with the metal part and the non-metal part. The sensor can be a sensor for sensing a temperature.

With the configuration, it is possible to provide an electronic part which is, for example, to be mounted on a digital thermometer.

Electronic equipment and electronic devices, such as digital thermometers each including the electronic part in accordance with the present invention, also fall within the scope of the present invention.

It is preferable to arrange a method in accordance with the present invention for manufacturing an electronic part such that an adhesive layer has a thickness of more than 0 µm and no more than 400 µm.

With the configuration, it is possible to suitably carry out curing of the adhesive layer.

It is preferable to arrange the method such that: a step is provided between a covered region and an adjacent region which is adjacent, on a surface of a non-metal part, to the covered region, the step being provided so that the adjacent region is elevated higher than the covered region; and, in the step of irradiating, with ultraviolet light, a gap between the non-metal part and a metal part, a gap between the step and the metal part is irradiated with the ultraviolet light.

According to the configuration, (i) a part of an adhesive, which part is on a metal-part side, is cured by an aerobic curing effect and (ii) a part of the adhesive, which part is on a non-metal-part side, is cured by use of a sequentially occurring curing reaction of radicals generated by ultraviolet light entering from a gap between the step and the metal part. Therefore, even in a case where such a step as one described above is provided on the surface of the non-metal part so that the gap between the non-metal part and the metal part has an L-shaped cross section, the non-metal part and the metal part can be successfully combined together.

It is preferable to arrange the method such that the metal part is made of iron, copper, or an alloy containing at least one of iron and copper.

With the configuration, the adhesive layer can be cured in even a shorter period of time.

The embodiment and the concrete examples, which have been discussed in the detailed description, are illustrative only, which should not be narrowly interpreted within the limits of such embodiment and concrete examples, but are rather meant to be applied in any variations within the spirit of the present invention, provided that such variations do not exceed the scope of the patent claims set forth below.

### Industrial Applicability

The present invention can be used for (i) manufacturing an electronic part made up of a metal part and a non-metal part and (ii) manufacturing various electrical equipment and electronic devices, including medical equipment such as a digital thermometer.

### Reference Signs List

- 10: Electronic part
- 11: Non-metal part
- 11a: Step
- 11b: Lower region (covered region)
- 11c: Upper region (adjacent region)
- 12: Adhesive layer
- 12a: Ultraviolet anaerobic curing adhesive
- 14: Metal part
- 14a: End surface
- 14b: Bottom surface
- 15: Temperature-sensing element
- 16: Lead wire
- 30: Adhesive-supplying means
- 40: Ultraviolet irradiation apparatus
- 41: Ultraviolet light
- 41a: Ultraviolet light pathway
- 100: Testing-evaluating sample
- 101: Non-metal part
- 101a: Step
- 101b: Lower region (covered region)
- 101c: Upper region (adjacent region)
- 102: Adhesive
- 103: Thickness gauge
- 104: Metal part
- 200: Production model (digital thermometer)
- 201: Resin main body (non-metal part)
- 204: Stainless cap (metal part)
- 400: Adhesion strength measuring device
- 401: Fixing section
- 402: Fixing section
- 403: Load generating section

## Claims

1. An electronic part comprising:
a non-metal part; and
a metal part covering a covered region provided on a surface of the non-metal part,
the covered region and the metal part being combined together via an adhesive layer provided by curing an ultraviolet anaerobic curing adhesive containing a photopolymerization initiator and organic peroxide.

2. The electronic part as set forth in claim 1, wherein the adhesive layer has a thickness of more than 0 µm and not more than 400 µm.

3. The electronic part as set forth in claim 1, wherein a step is provided between the covered region and an adjacent region which is adjacent, on the surface of the non-metal part, to the covered region, the step being provided so that the adjacent region is elevated higher than the covered region.

4. The electronic part as set forth in claim 3, wherein the non-metal part and the metal part share a continuous surface.

5. The electronic part as set forth in claim 1, wherein the metal part is made of iron, copper, or an alloy containing at least one of iron and copper.

6. The electronic part as set forth in claim 1, wherein the non-metal part is made of at least one material selected from the group consisting of resin, ceramic, glass, and rubber.

7. An electronic part as set forth in claim 1, further comprising:
a sensor provided in a hollow enclosed with the metal part and the non-metal part.

8. The electronic part as set forth in claim 7, wherein the sensor is a sensor for sensing a temperature.

9. A digital thermometer comprising the electronic part as set forth in claim 8.

10. A method for manufacturing an electronic part,
said electronic part, comprising:
a non-metal part; and
a metal part covering a covered region provided on a surface of the non-metal part,
said method, comprising the steps of:
(i) forming, between the covered region and the metal part, an adhesive layer by use of an ultraviolet anaerobic curing adhesive containing a photopolymerization initiator and organic peroxide; and
(ii) irradiating, with ultraviolet light, a gap between the non-metal part and the metal part.

11. The method as set forth in claim 10, wherein the adhesive layer has a thickness of more than 0 µm and not more than 400 µm.

12. The method as set forth in claim 10, wherein:
a step is provided between the covered region and an adjacent region which is adjacent, on the surface of the non-metal part, to the covered region, the step being provided so that the adjacent region is elevated higher than the covered region; and
in the step (ii), a gap between the step and the metal part is irradiated with the ultraviolet light.

13. The method as set forth in claim 10, wherein the metal part is made of iron, copper, or an alloy containing at least one of iron and copper.
